Europäisches Patentamt

(19) European Patent Office

Office européen des brevets

(11) Publication number: **0 027 458**
**B1**

(12) **EUROPEAN PATENT SPECIFICATION**

(45) Date of publication of patent specification: **19.09.84**

(51) Int. Cl.³: **B 65 G 65/32, B 05 B 3/12**

(21) Application number: **80900872.5**

(22) Date of filing: **10.04.80**

(86) International application number:
**PCT/US80/00434**

(87) International publication number:
**WO 80/02278 30.10.80 Gazette 80/25**

(54) **THE KINETIC EXTRUDER: A DRY PULVERIZED SOLID MATERIAL PUMP.**

(30) Priority: **23.04.79 US 32646**

(43) Date of publication of application:
**29.04.81 Bulletin 81/17**

(45) Publication of the grant of the patent:
**19.09.84 Bulletin 84/38**

(84) Designated Contracting States:
**CH DE FR GB LI NL**

(56) References cited:
**US-A-3 103 311**
**US-A-3 182 825**
**US-A-4 034 870**

(73) Proprietor: **LOCKHEED MISSILES & SPACE COMPANY, INC.**
**1111 Lockheed Way**
**Sunnyvale, CA 94086 (US)**

(72) Inventor: **BONIN, John Henry**
**1257 Sargent Drive**
**Sunnyvale, CA 94087 (US)**
Inventor: **MEYER, John William**
**3124 David Avenue**
**Palo Alto, CA 94303 (US)**
Inventor: **DANIEL, Arnold Dewey, Jr.**
**P.O. Box 112**
**Pleasanton, CA 94566 (US)**

(74) Representative: **Boon, Graham Anthony et al**
**Elkington and Fife High Holborn House 52/54 High Holborn**
**London, WC1V 6SH (GB)**

EP 0 027 458 B1

Courier Press, Leamington Spa, England.

## Description

This invention relates to an apparatus for feeding a pulverized material from a supply source to a housing maintained at elevated pressure. One field in which such an apparatus may be used is coal gasification wherein pulverized or powdered coal is fed to an elevated pressure reactor vessel from an atmospheric pressure hopper or the like. The present invention may thus be used, for example, to feed dry pulverized coal from an atmospheric hopper to a high pressure reactor vessel.

In one prior arrangement, the slurry feed method, a liquid-solid mixture is pumped into the pressure vessel. Another arrangement is to load the material into a hopper, close and pressurize the hopper with gas, and then dump the material, along with the gas, into the pressure vessel. Such batch feeding of material is not desirable. With both of these arrangements, the fluid (either gas or liquid) required to transport the solid material may not be required in the process and may be undesirable and require considerable effort to be removed before processing can begin.

Other centrifugal devices have been proposed for delivering dry pulverized coal to a high pressure chamber, as in US—A—3182825 and 4034870. In US—A—3182825 spring pressure valves are used for controlling the entry of grannular material into a high pressure zone. In US—A—4034870 a flexible member which gives way to centrifugal forces is used for introducing a pulverulent substance into a high pressure chamber.

US—A—3182825 (Zellerhoff) describes an apparatus for feeding a pulverized material from a supply source to a housing maintained at elevated pressure, said apparatus including a rotor disposed in said housing and a feed means, said rotor being operably connected to the feed means for receiving the pulverized material and discharging it within the housing.

The present invention provides an apparatus of the type just described, which is characterized in that said rotor includes a first means to form a plug of the material, and a second means downstream of the outlet of the first means and substantially in alignment therewith, said second means including an isobaric control nozzle having a fixed geometry, said control nozzle being sized to control the flow of said material through said rotor and into said housing, said control nozzle further including at least one fixed port communicating with the interior of said housing for maintaining the junction between said first and second means at the same pressure as the pressure in said housing.

The present invention preferably utilizes a plurality of radial passageways or sprues each with a control orifice at the high pressure end to maintain a stable plug of coal in the passageways. The dimensions of the orifice are determined by the size and permeability of the pulverized material, e.g. coal stock, being fed. Without such a control orifice, material flow cannot be established and maintained in a stable fashion.

Preferably, the configuration of the spin-up zone and entrance region of the sprues of the present invention is such that the incoming material always impinges on surfaces at an angle which ensures that the material does not stick and build up on these surfaces. Without this feature, regions of material build up occur which either constrict the flow in the sprues or periodically flock off and block the sprues.

Also, the spin-up zone is preferably vented to remove the carrier gas that is used to transport the incoming material and to vent the gases which leak from the high pressure region back to the sprues under certain operating conditions.

Also in the present invention, the feed means is preferably stationary. If the feed means were to rotate, as in some of the prior art devices, the resulting centrifugal forces would tend to concentrate the incoming material on the inner surfaces of the feed means where they would easily build up and restrict or stop the incoming supply of material.

The present invention provides in an embodiment thereof, an apparatus for the continuous feeding of pulverized or powdered material to a pressurized container which minimizes the need for a carrier fluid and eliminates venting from the pressurized hopper. This is achieved by the use of a rotor within the pressurized container through which the material outside the container is supplied. The material and gas mixture are fed from an atmospheric feed hopper through a stationary feed pipe, then into a spin-up zone between the stationary inner hub and the rotatable driven rotor where it enters into sprues.

The spin-up zone is vented to allow the removal of excess gas from the material/gas mixture and a small amount of gas leakage from the high pressure vessel while maintaining a favourable pressure gradient in the feed pipe. It also maintains a favourable pressure gradient across the feed pipe which ensures a reliable solid feed of material to the rotor.

Material is fed from the spin-up zone into a plurality of sprues on the rotating rotor. The transition to the sprues is preferably designed to reduce or eliminate any ledges where coal may accumulate and agglomerate.

The sprues preferably include two sections. The first section has a relatively large cross sectional area reduction and is shaped to provide a constant angle between the radial acceleration vector and the wall. The second section of the sprues has a relatively small cross sectional area reduction and thus produces a relatively large share of the pressure in the coal plug traveling through the sprue. The sprues are preferably designed to be easily replaceable.

In the accompanying drawings:

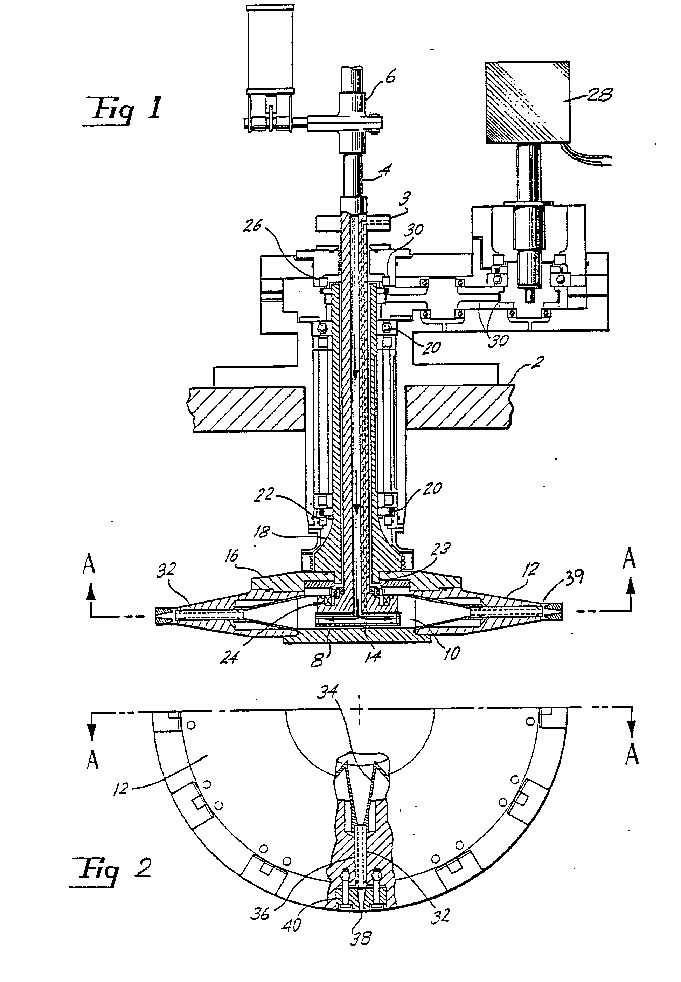

Figure 1 is a vertical sectional view, with portions shown diagrammatically, of a material feeder embodying this invention for feeding pulverized or powdered material to a pressurized container.

Figure 2 is an enlarged sectional view of the rotor illustrated in Figure 1 showing the details of the sprues.

In the Figures there is shown a fragmentary portion of a pressure vessel 2. This pressure vessel 2 may be used for some process, such as coal gasification. Coal gasification requires that the pressure within vessel 2 be maintained at elevated pressure, for example 600 psi. Such pressures have made the feeding of coal to the process difficult and expensive.

In the illustrated embodiment, the feeder of the present invention is positioned within the pressure vessel 2. As will become apparent, the feeder may be located outside the pressure vessel 2, if desired, so long as the proper pressure is maintained on the feeder.

The material feeder comprises a stationary feed tube 4 for receiving material from a feed hopper or the like (not shown). A normally open valve 6 may be positioned between the feed hopper and the stationary feed tube 4.

The downstream end 8 of the stationary feed tube contains a 90° exit in the feed tube to allow the solid material to enter the spin-up zone 10 in a radial direction.

The rotor 12 encloses the spin-up zone and embodies the sprues and includes the control orifices.

The spin-up zone 10 is maintained at a lower pressure than the feed hopper pressure by vent tube 14, which is connected to a suction device or any other well-known means for maintaining low pressure. The suction assists in maintaining a continuous feed of material to the rotor 12 and also vents excess gas from the solids.

The rotor 12 includes a hub portion 16 attached to the lower end of a hollow drive shaft 18. The hollow drive shaft 18 extends through the pressure vessel wall 2 and surrounds the stationary feed tube 4. The rotor is rotatably supported by bearings 20. Seal ring 22 is provided between the drive shaft 18 and the stationary housing 2 to prevent leakage of gas thereat. The feed tube 4 is supported inside the rotating shaft 18 by bearing 23 and leakage is prevented by seal 24. The cavity between the stationary feed tube and the drive shaft can be pressure filled with oil, if desired, to assure that bearing 23 is lubricated and remains free of contaminants.

Seal ring 26 is provided between the drive shaft 18 and ambient pressure.

The drive shaft 18 and attached rotor 12 are driven by a motor 28 connected to shaft 18 by suitable drive connecting means, such as gears 30.

The rotor 12 includes a plurality of radially extending sprues 32. The transition to the sprues is designed to reduce or eliminate any ledges where coal may accumulate and agglomerate. The sprues as shown are made in two sections. The first section 34, viewed sectionally, has a transition from a rectangular cross section shape to a circular cross sectional shape and provides a large reduction in area. The shape of the first section 34 is designed such that the curvature of the wall yields a constant angle between the radial acceleration vector and the wall. The second section 36 defines an aperture which is circular in cross sectional area and which has a relatively small area reduction in the radial direction.

The coal is discharged from the sprues 32 into isobaric control orifices 38. Openings 39 in the orifices permit the pressure to equalize between the pressure vessel 2 and the interior of the control orifices. The latter are held into the rotor 12 by means of the orifice blocks 40. The retention blocks are designed to permit the high pressure existing in vessel 2 to equalize across the control orifice. The function of the control orifice is to meter the coal flow through the sprue.

The sprues and control orifices are designed to be easily replaceable.

**Claims**

1. An apparatus for feeding a pulverized material from a supply source to a housing (2) maintained at elevated pressure, said apparatus including a rotor (12) disposed in said housing (2) and a feed means (4), said rotor (12) being operably connected to the feed means (4) for receiving the pulverized material and discharging it within the housing (2), characterized in that said rotor (12) includes a first means (32) to form a plug of the material, and a second means downstream of the outlet of the first means (32) and substantially in alignment therewith, said second means including an isobaric control orifice (38) having a fixed geometry, said control orifice (38) being sized to control the flow of said material through said rotor (12) and into said housing (2), said control orifice (38) further including at least one fixed port (39) communicating with the interior of said housing (2) for maintaining the junction between said first and second means at the same pressure as the pressure in said housing (2).

2. An apparatus according to claim 1, wherein said first means comprises a plurality of radial passageways (32), each passageway including a first and second section (34, 36) said first section (34) having a relatively large cross sectional area reduction in the radial direction and said second section (36) having a relatively small cross sectional area reduction in the radial direction.

3. An apparatus according to claim 2, wherein said first section (34) transitions from a rectangular to a circular cross sectional shape.

4. An apparatus according to any one of the preceding claims, including venting means (14) for removing excess gas from the terminal end of said feed means (4) and for maintaining a continuous feed of material in said feed means (4).

**Revendications**

1. Un appareil pour alimenter en matière pulvérisée provenant d'une source d'alimentation une enceinte (2) maintenue à une pression élevée. cet appareil comprenant un rotor (12) placé à l'intérieur de l'enceinte (2) et des moyens d'alimentation (4), le rotor (12) étant accouplé fonctionellement aux moyens d'alimentation (4) pour recevoir la matière pulvérisée et pour la décharger à l'intérieur de l'enceinte (2) caractérisé en ce que le rotor (12) comprend des premiers moyens (32) destinés à former un tampon de la matière, et des seconds moyens situés en aval de la sortie des premiers moyens (32) et pratiquement alignés avec ceux-ci, les seconds moyens comprenant un orifice de commande isobare (38) ayant une configuration géométrique fixe, cet orifice de commande (38) étant dimensionné de façon à commander l'écoulement de la matière qui traverse le rotor (12) et pénètre dans l'enceinte (2), cet orifice de commande (38) comprenant en outre au moins une ouverture fixe (39) qui communique avec l'intérieur de l'enceinte (2) pour maintenir la jonction entre les premier et second moyens à une pression égale à la pression dans l'enceinte (2).

2. Un appareil selon la revendication 1, dans lequel les premiers moyens comprennent un ensemble de passages radiaux (32), chaque passage comprenant une première partie et une seconde partie (34, 36), la première partie (34) présentant une diminution d'aire de section transversale relativement grande, dans la direction radiale, et la seconde partie (36) présentant un diminution d'aire de section transversale relativement faible, dand la direction radiale.

3. Un appareil selon la revendication 2, dans lequel la première partie (34) définit une transition d'une forme de section transversale rectangulaire à une forme de section transversale circulaire.

4. Un appareil selon l'une quelconque des revendications précédentes, comprenant des moyens d'évacuation (14) destinés à évacuer le gaz en excès à partir de l'extrémité terminale des moyens d'alimentation (4) et à maintenir une alimentation en matière continue dans les moyens d'alimentation (4).

**Patentansprüche**

1. Vorrichtung zum Zuführen eines pulverisierten Materials aus einer Versorgungsquelle zu einem unter erhöhtem Druck gehaltenen Gehäuse (2), bestehend aus einem in dem Gehäuse (2) angeordneten Rotor (12) und einer Zuführeinrichtung (4), wobei der Rotor (12) zur Aufnahme des pulverisierten Materials und zu dessen Abgabe innerhalb des Gehäuses (2) funktionell mit der Zuführeinrichtung (4) verbunden ist, dadurch gekennzeichnet, daß der Rotor (12) eine erste Einrichtung (32) zur Bildung eines Materialpfropfens und eine zweite Einrichtung aufweist, welche stromabwärts von dem Auslaß der ersten Einrichtung (32) angeordnet ist und im wesentlichen mit dieser fluchtet, wobei zu der zweiten Einrichtung eine isobare Steueröffnung (38) mit einer festen Geometrie gehört, deren Größe für die Steuerung der Strömung des Materials durch den Rotor (12) und in das Gehäuse (2) bemessen ist, wobei die Steueröffnung (38) weiterhin wenigstens eine feste, mit dem Innern des Gehäuses (2) in Verbindung stehende Öffnung (39) aufweist, durch die der Übergangsbereich zwischen der ersten Einrichtung (32) und der zweiten Einrichtung auf dem selben Druck wie im Gehäuse (2) haltbar ist.

2. Vorrichtung nach Anspruch 1, dadurch gekennzeichnet, daß die erste Einrichtung zahlreiche radiale Kanäle (32) besitzt, wobei jeder Kanal einen ersten und einen zweiten Abschnitt (34, 36) aufweist, wobei der erste Abschnitt (34) in radialer Richtung eine relativgroße Querschnittsflächenverringerung besitzt und wobei der zweite Abschnitt (36) in radialer Richtung eine relativ kleine Querschnittsflächenverringerung aufweist.

3. Vorrichtung nach Anspruch 2, dadurch gekennzeichnet, daß der erste Abschnitt (34) aus einer rechtwinkligen in eine kreisförmige Querschnittsform übergeht.

4. Vorrichtung nach einem der vorangehenden Ansprüche, gekennzeichnet durch eine Belüftungseinrichtung (14) zum Entfernen von überschüssigen Gas aus dem Ausgangsende der Zuführeinrichtung (4) und zur Aufrechterhaltung einer ständigen Materialzufuhr in der Zuführeinrichtung (4).

*Fig 1*

*Fig 2*